# EUROPEAN PATENT APPLICATION

(11) **EP 3 677 457 A1**
(43) Date of publication of application: **08.07.2020**
(21) Application number: 18850529.1
(22) Date of filing: 10.07.2018
(51) Int. Cl.: B60H 1/00, A47C 7/74, B60N 2/56

(54) **BLOWER DEVICE FOR REAR SEAT**

(30) Priority: 28.08.2017 JP 2017163626
(71) Applicant: Denso Corporation, Kariya-shi, Aichi 448-8661 (JP)
(72) Inventor: SAGO Yasuhiro, Kariya-city Aichi 448-8661 (JP); WEGENER Ingo, Eching 85386 (DE)
(74) Representative: TBK
(86) International application number: PCT/JP2018/026037
(87) International publication number: WO 2019/044184

(57) **Abstract**

A seat (6) has a blower device (RAS) for a rear seat. The RAS has a blower (22) arranged between a frame (31) and a surface material layer. The RAS has a member for defining and forming an air passage (21) extending from the blower along the outside of the frame. The member is provided by a height duct (23) and a lateral duct (24). The RAS has a member for defining and forming a discharge outlet from which air supplied from the air passage is discharged toward the rear seat. The member is provided from the lateral duct. An adverse effect, caused by the blower and the air passage, applied to the frame of the seat is suppressed. It is possible to provide a blower device for a rear seat, which discharges air toward the rear seat without impairing the fundamental function of the frame for the seat.

## Description

### [CROSS-REFERENCE TO RELATED APPLICATION]

The present application claims the benefit of priority from Japanese Patent Application No. 2017-163626 filed in Japan filed on August 28, 2017, the entire disclosure of the above application is incorporated herein by reference.

### [TECHNICAL FIELD]

The disclosure in this specification relates to a blower device for rear seat.

### [BACKGROUND ART]

Patent Document 1 and Patent Document 2 disclose a blower device for rear seat, which blows air toward the rear seat. Patent Document 1 discloses a fan accommodated in a center part of a seat back of a front seat. Patent Document 2 discloses a fan arranged on an outside of a front seat and a duct.

### [PRIOR ART DOCUMENT]

### [PATENT DOCUMENT]

[Patent Document 1] JP6094373B
[Patent Document 2] EP3144180A

### [SUMMARY OF THE INVENTION]

The device disclosed in Patent Document 1 uses a specially shaped frame, which can accommodate a fan. This is because the air discharged from the fan blows across an area defined by the frame. In this case, the frame of the front seat cannot get the optimum shape as a seat. On the other hand, in the device disclosed in Patent Document 2, the entire fan and duct are exposed outside the front seat.

In the aforementioned viewpoint, or in other viewpoint which has not been described, further improvement is demanded for a blower device for rear seat.

It is an object disclosed to provide a blower device for rear seat in which an adverse effect to a frame of a front seat is suppressed.

An blower device for rear seat disclosed herein comprises a blower (22, 522) which is arranged between a frame (31) of a seat arranged in front of a rear seat and a surface material layer (33) of the seat; a member (23, 24, 32, 234, 424) which defines and forms an air passage (21) extending from the blower along an outside of the frame; and a member (25) which defines and forms a discharge outlet (27) from which air supplied from the air passage is discharged toward the rear seat.

According to the disclosed blower device for rear seat, the blower is arranged between the seat frame and the surface material layer. In addition, the air passage extending from the blower extends along the outside of the frame. As a result, an adverse effect, caused by the blower and the air passage, applied to the frame of the seat is suppressed. It is possible to provide a blower device for a rear seat which discharges air toward the rear seat without impairing the fundamental function of the frame for the seat.

The disclosed aspects in this specification adopt different technical solutions from each other in order to achieve their respective objectives. Reference numerals in parentheses described in claims and this section exemplarily show corresponding relationships with parts of embodiments to be described later and are not intended to limit technical scopes. The objects, features, and advantages disclosed in this specification will become apparent by referring to following detailed descriptions and accompanying drawings.

### [BRIEF DESCRIPTION OF DRAWINGS]

FIG. 1 is a perspective view showing a vehicle of a first embodiment.
FIG. 2 is a transparent view showing a seat back.
FIG. 3 is a cross-sectional view showing a seat back.
FIG. 4 is a perspective view showing a blower device for rear seat.
FIG. 5 is a partial perspective view showing a back shoulder.
FIG. 6 is a cross-sectional view on a line VI-VI in FIG. 3.
FIG. 7 is a cross-sectional view on a line VII-VII in FIG. 3.
FIG. 8 is a partial cross-sectional view showing a seat back of a second embodiment.
FIG. 9 is a cross-sectional view showing a seat back of a third embodiment.
FIG. 10 is a partial perspective view showing a back shoulder of a fourth embodiment.
FIG. 11 is a perspective view showing a seat back of a fifth embodiment.
FIG. 12 is a perspective view showing a vehicle interior of a sixth embodiment.
FIG. 13 is a partial cross-sectional view showing a seat back of a seventh embodiment.

### [DETAILED DESCRIPTION]

Hereinafter, a plurality of embodiments will be described with reference to the drawings. In some embodiments, parts which are functionally and/or structurally corresponding and/or associated are given the same reference numerals, or reference numerals with different hundreds digit or higher digits. For corresponding parts and/or associated parts, additional explanations can be made to the description of other embodiments.

### First Embodiment

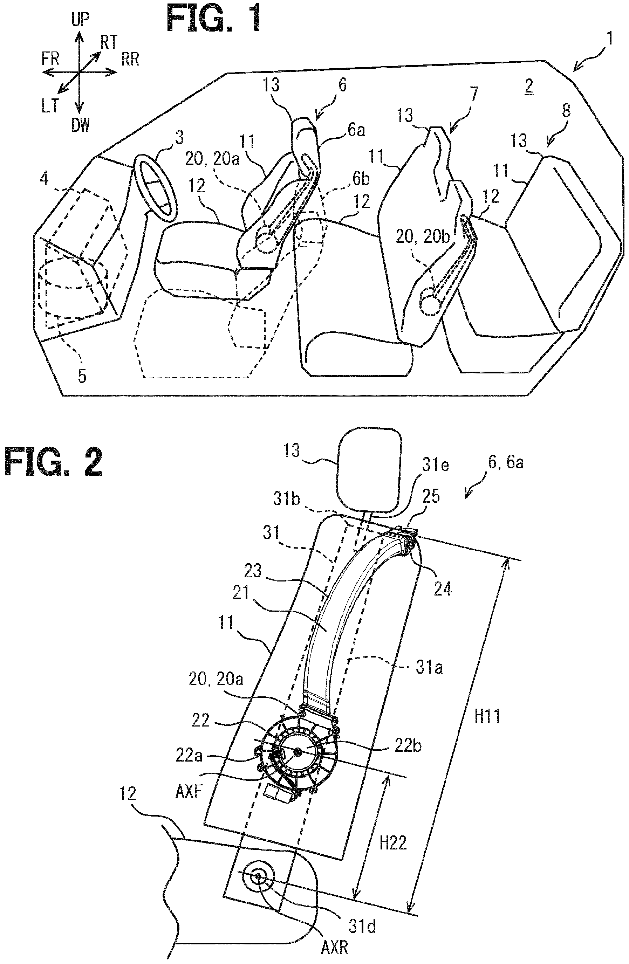

In FIG. 1, a vehicle 1 has a passenger compartment 2 for a person to ride. The vehicle 1 is a car. Note that the term vehicle 1 includes an airplane, a ship, and a private room for games, and the like. The vehicle 1 has a control device 3. A steering wheel provides the control device 3, for example. The control device 3 is arranged so that a user of the vehicle 1 faces a forward direction of the vehicle 1. The shape and structure of the vehicle 1 are defined by a forward direction FR that is a forward direction, a rear direction RR that is a backward direction, a right direction RT, a left direction LT, an upward direction UP, and a downward direction DW.

The vehicle 1 has an air conditioner 4. The air conditioner 4 performs air-conditioning of the passenger compartment 2. The air conditioner 4 has a main blower 5 for the passenger compartment 2. The blower 5 discharges air toward the passenger compartment 2.

The vehicle 1 has a plurality of seats 6, 7, and 8 for a plurality of people to ride. The plurality of seats 6, 7, and 8 are arranged in the passenger compartment 2. The plurality of seats 6, 7, 8 are arranged in three rows in the front-rear direction of the vehicle 1. The plurality of seats 6, 7, 8 are arranged in a front and a rear in the passenger compartment 2 so as to provide a front seat and a rear seat. The seat 6 is a front seat relative to the seat 7. The seat 7 is a rear seat relative to the seat 6. The seat 7 is a front seat relative to the seat 8. The seat 8 is a rear seat relative to the seat 7. The seat 6 is also referred to as a foremost seat arranged on a front line of the passenger compartment 2. The seat 7 is also referred to as an intermediate seat arranged between the seat 6 and the seat 8. The seat 8 is also referred to as a rearmost seat arranged on a rear most line of the passenger compartment 2.

The seat 6 in the first row are arranged facing the control device 3. The seat 6 allows an operator of the vehicle 1 to sit facing the control device 3. The seat 6 has a seat 6a for the operator. Furthermore, the sheet 6 has a sheet 6b for an assistant. The sheet 6b is illustrated by dashed lines to aid understanding. The sheet 6a and the seat 6b are independent sheets for each one person. The plurality of seats 6a and 6b are arranged so as to divide the passenger compartment 2 into a plurality of sections along the left-right direction of the vehicle 1, that is, the width direction. The seat 6 includes a seat back 11 for a person to lean on, a seat cushion 12 for a person to sit on, and a headrest 13 for supporting a persons head.

The seat 7 in the second row is a seat for passengers. The sheet 7 is a continuous sheet for a plurality of persons. The seat 7 may be also called a bench seat. The seat 7 is arranged so as to be across over the passenger compartment 2 along the left-right direction of the vehicle 1, that is, the width direction. In the seat 7, the seat back 11 and the headrest 13 are continuous. The seat back 11 and the headrest 13 are covered with a continuous surface material. Alternatively, the sheet 7 can be provided by a plurality of sheets, similar to the sheet 6.

The seat 8 in the third row is a seat for passengers. The sheet 8 is a continuous sheet for a plurality of persons. The seat 8 may be also called a bench seat. In the seat 8, the seat back 11 and the headrest 13 are continuous.

The vehicle 1 has a blower device for rear seat 20. The blower device for rear seat 20 is a device that discharges air for an occupant seated on the rear seat. The vehicle 1 has a plurality of blower device for rear seats 20. The blower device for rear seat 20 is also referred to as a rear air shower device. In the following description, the blower device for rear seat 20 is also referred to as the RAS 20.

The vehicle 1 has a first RAS 20a for an occupant seated on the seat 7. The first RAS 20a is arranged on the seat 6a which is the front seat. In other words, the first RAS 20a is arranged in the drivers seat. Additionally or alternatively, the firs t RAS 20a may be arranged on the seat 6b. The vehicle 1 has a second RAS 20b for an occupant seated on the seat 8. The second RAS 20b is arranged on the seat 7 that is an intermediate seat.

The first RAS 20a is arranged to extend from the inside to the outside of the vehicle 1 to be arranged on the seat 6a and/or the seat 6b. The second RAS 20b is arranged on the seat 7 that is arranged to be across over the passenger compartment 2 along the left-right direction of the vehicle 1, that is, the width direction. The second RAS 20b is arranged to extend from the outside of the vehicle 1 toward the inside. The first RAS 20a and the second RAS 20b have corresponding elements. The first RAS 20a and the second RAS 20b are similar to each other. In the following description, the first RAS 20a will be described. The structure of the second RAS 20b shall be also understood from these descriptions. When the sheet 7 is provided as a stand-alone like the sheet 6, the second RAS 20b can be provided by the same shape as the first RAS 20a. In this case, the second RAS 20b is arranged to extend from the inside of the vehicle 1 toward the outside.

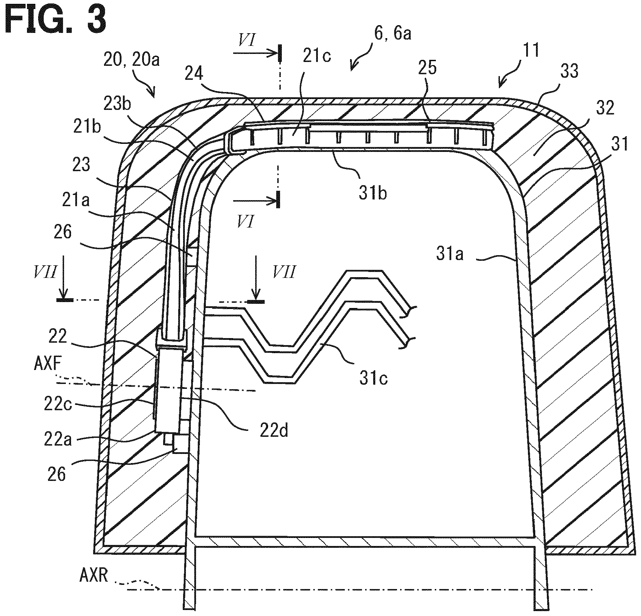

Based on FIG. 2 and FIG. 3, the arrangement of the first RAS 20a in the seat 6a is understood. FIG. 2 is a perspective view from a side showing the arrangement of the first RAS 20a in the seat back 11. FIG. 3 is a cross sectional view showing the arrangement of the first RAS 20a in the seat back 11. FIG. 3 shows the back surface of the seat back 11, that is, the back surface of the seat 6a as viewed from the seat 7.

The seat back 11 has a frame 31. The frame 31 is a frame for defining the shape of the seat back 11. The frame 31 is a member for receiving a load applied to the seat back 11. The frame 31 is provided by a plate-like member and/or a pipe-like member. The frame 31 is provided by resin and/or metal.

The frame 31 has two side frames 31a extending along an up and down direction of the seat 6. The side frame 31a is made of resin, for example. The side frame 31a is a plate-shaped molded product, for example. The frame 31 has an upper frame 31b which connects the two side frames 31a. The upper frame 31b is a member extending in the lateral direction. The upper frame 31b is made of metal, for example. The upper frame 31b is a bent product of pipe material and has an arch shape. The side frame 31a and the upper frame 31b are joined at an arbitrary position. The frame 31 has a U-shape in a reverse shape in an upside down as a whole. The frame 31 has a plurality of springs 31c.

The frame 31 has a hinge 31d. The hinge 31d couples the seat back 11 to the seat cushion 12 to be rotatable. The seat back 11 can be reclined with respect to the seat cushion 12 by the hinge 31d. The hinge 31d provides a reclining axis AXR.

The frame 31 defines and forms a frame space that occupies a predetermined volume in the seat back 11. The frame space is smaller than the outer surface of the seat back 11. The frame space is a plate shape having a predetermined thickness. The frame 31 is also a member that defines an outside of the frame space. The frame space includes many cavities, but not just cavities. The frame space includes a plurality of springs 31c and a part of the seat pad. The frame space may include other members. The first RAS 20a is arranged on an outside to the frame space.

The seat back 11 has a seat pad 32 on an outside to the frame 31. The seat pad 32 is an elastically deformable member. In many cases, the seat pad 32 is provided by a porous soft resin such as urethane foam. The seat pad 32 is arranged on an outside to the frame 31. The seat pad 32 covers the frame 31. The seat pad 32 is arranged on at least a front side and a lateral side to the frame 31. The seat pad 32 is also arranged on an upper side to the frame 31. A part of the seat pad 32 is also arranged in the frame space.

The seat back 11 has a surface material layer 33. The surface material layer 33 provides an outer surface of the seat back 11. The surface material layer 33 is arranged on an outer side than the seat pad 32. The surface material layer 33 covers the seat pad 32. The surface material layer 33 is provided by woven fabric, resin, and/or leather.

The first RAS 20a includes a blower 22, a height duct 23, and a lateral duct 24. The height duct 23 and the lateral duct 24 provide one duct extending from the blower 22. The lateral duct 24 has an exposed portion 25. The exposed portion 25 is a member that defines and forms a discharge outlet 27. The discharge outlet 27 discharges the air supplied from the air passage 21 toward the rear seat. The first RAS 20a is positioned on an outside of the frame 31. The first RAS 20a is positioned between the surface material layer 33 and the frame 31 except for the exposed portion 25. The first RAS 20a is embedded within the seat pad 32 except for the exposed portion 25. The blower 22 and the height duct 23 are arranged between the frame 31 and the seat pad 32. The lateral duct 24 is embedded between the seat pad 32 and the surface material layer 33 except for the exposed portion 25. The lateral duct 24 is arranged along the inner side of the surface material layer 33. The exposed portion 25 is exposed to an outside, that is, to a passenger compartment 2 through an opening 33a provided on the surface material layer 33.

The first RAS 20a defines and forms an air passage 21 therein. The air passage 21 extends from the blower 22 along the outside of the frame 31. The air passage 21 extends from the blower 22 between the frame 31 and the surface material layer 33. In other words, the air passage 21 extends from the blower 22 between the frame 31 and the seat pad 32. The air passage 21 includes an up and down passage 21a, an elbow passage 21b, and a lateral passage 21c, which will be described later. The height duct 23 and the lateral duct 24, which are the member defining and forming the air passage 21, are positioned between the frame 31 and the surface material layer33. The exposed portion 25, which is a member defining and forming the discharge outlet 27, is exposed to an outside of the sheet 6a through an opening 33a provided on the surface material layer 33.

The first RAS 20a is fixed to the frame 31 by a plurality of fixing units 26. The first RAS 20a is also fixed to the seat pad 32 by a plurality of fixing units 26. The surface of the first RAS 20a is in contact with the seat pad 32.

The blower 22 is wrapped by the seat pad 32 and the surface material layer 33. The height duct 23 is wrapped by the seat pad 32 and the surface material layer 33. The lateral duct 24 is wrapped by the seat pad 32 and the surface material layer 33 except for the exposed portion 25. As a result, the seat pad 32 functions as a soundproof member for suppressing noise of the first RAS 20a. In another viewpoint, the seat pad 32 functions as an anti-vibration member for suppressing vibration of the first RAS 20a.

The blower 22 is arranged between the frame 31 and the surface material layer 33. The blower 22 is positioned between the frame 31 and the seat pad 32. The blower 22 is a sirocco fan. The blower 22 can be provided in various forms such as a centrifugal fan and a centrifugal blower. The centrifugal blowers include sirocco type, radial type, and turbo type. The blower 22 has a casing 22a. The casing 22a is a flat spiral tube. The blower 22 has a cylindrical fan 22b. The blower 22 has a rotation axis AXF for the fan 22b. The rotation axis AXF extends along the width direction of the seat 6a, that is, the left-right direction. The rotation axis AXF is substantially horizontal. The blower 22 has an electric motor 22c for rotating the fan 22b. The casing 22a defines an inlet 22d for the fan 22b.

The casing 22a provides an inlet passage, which reaches the inside of the fan 22b from the inlet 22d. The casing 22a provides an outlet passage, which communicates from the outer periphery of the fan 22 b to the height duct 23. The inlet 22d opens toward the inside of the seat back 11. In other words, the inlet 22d opens toward the frame 31. A cavity is formed between the inlet 22d and the frame 31. As a result, the blower 22 has the inlet 22d that opens at an inside of the seat 6a.

The height duct 23 extends in an up and down direction along the side frame 31a. The height duct 23 is arranged along the outside of the frame 31. The height duct 23 extends from the blower 22 toward one end of the lateral duct 24. The height duct 23 defines and forms a height passage 21a extending from the blower 22 along the side of the frame 31.

The height duct 23 has an elbow 23b at the upper end. The elbow 23b bends the air passage 21 from a height direction to a lateral direction. The elbow 23b provides an elbow passage 21b which bends in the width direction from the up and down passage 21a at a shoulder of the seat 6a. The elbow passage 21b is bent from the up and down passage 21a toward the rear direction RR.

The height duct 23 extends to bend gradually from a lateral side of the frame 31 toward the rear direction RR along a blowing direction. The height duct 23 reaches the rear direction RR of the frame 31 at the upper part of the frame 31. Therefore, the lateral duct 24 is arranged on the rear direction RR to the headrest column 31e. The height duct 23 communicates the blower 22 and the lateral duct 24.

The lateral duct 24 is arranged along an upper part of the seat 6a or a rear corner of the upper part. The lateral duct 24 defines and forms a lateral passage 21c extending from the elbow passage 21b along the width direction of the seat 6a. Therefore, the lateral passage 21c is positioned at the upper part of the seat 6a or at the rear corner at the upper part. The lateral duct 24 extends along the width direction of the seat 6a. The exposed portion 25 extends long along the lateral duct 24. The exposed portion 25 is exposed toward the rear seat, that is, the seat 7.

The casing 22a, the height duct 23, and the lateral duct 24 are members for defining and forming the air passage 21. The height duct 23 and the lateral duct 24 provide an air passage 21. The air passage 21 extends from the blower 22 in the upward direction UP. The air passage 21 is bent at a shoulder of the seat 6a. The air passage 21 extends in the width direction of the seat 6a, that is, in the right direction RT.

In FIG. 2, the air blower 22 is positioned on a lower part of the sheet 6a. The blower 22 is positioned on a lower part of the seat back 11. The seat back 11 has a height H11. The height H11 is a distance between an end portion of the seat back 11 and the reclining axis AXR. The blower 22 is arranged lower than half of the height H11 of the seat back 11. That is, the height H22 of the rotation axis AXF is smaller than half of the height H11 (H22<H11/2). The height H22 is a distance between the rotation axis AXF and the reclining axis AXR. The blower 22 is the heaviest weight member, which is heaviest in the first RAS 20a. In addition, the blower 22 is also a noise source and/or a vibration source. This arrangement makes it possible to arrange the first RAS 20a stably. This arrangement suppresses noise and/or vibration caused by the first RAS 20a.

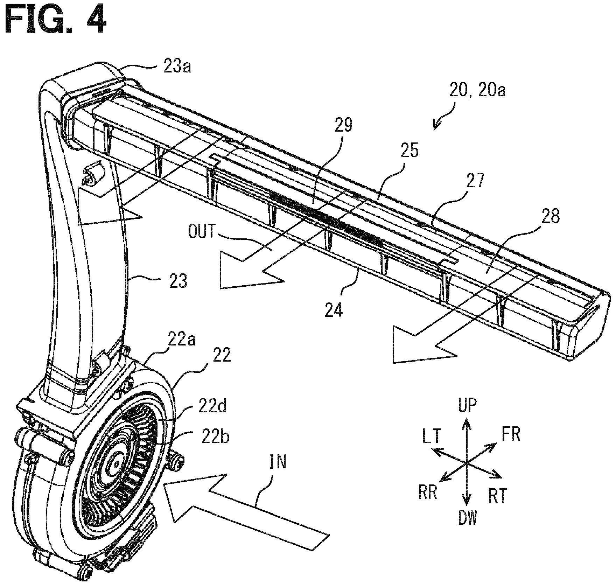

In FIG. 4, the lateral duct 24 has an exposed portion 25 on an upper surface. The exposed part 25 has the discharge outlet 27. The lateral duct 24 and the exposed portion 25 provide members for defining and forming the discharge outlet 27. The discharge outlet 27 is formed to discharge air toward the seat 7 as the rear seat. The discharge outlet 27 is elongated in the width direction. The discharge outlet 27 is elongated along the lateral passage 21c. The exposed portion 25 has a tongue portion 28. The tongue portion 28 extends downstream of the discharge outlet 27. The tongue 28 provides a smooth surface. The tongue portion 28 guides the air exiting from the discharge outlet 27.

The exposed portion 25 has an adjustment mechanism 29. The adjustment mechanism 29 is provided only on a central portion in the width direction of the discharge outlet 27. The adjustment mechanism 29 can be displaced in up and down. The user can operate the adjustment mechanism 29. The adjustment mechanism 29 displaces a part of the surface of the tongue portion 28 in up and down. The adjustment mechanism 29 adjusts the direction of the air guided along the tongue portion 28. Alternatively, the adjustment mechanism 29 may be formed such that two or more parts move independently.

The first RAS 20a sucks air from the inside of the seat 6a as indicated by an arrow IN. The first RAS 20a blows air from the blower 22 through the height duct 23 and the lateral duct 24. The first RAS 20a discharges air from the discharge outlet 27 toward the rear direction RR as indicated by an arrow OUT. The air discharged from the discharge outlet 27 is supplied like a shower toward the rear seat. The air discharged from the discharge outlet 27, elongated, is supplied toward the seat 7 as the rear seat while entraining the air around the seat 6 as the front seat. The air around the seat 6 is in a comfortable state by a conditioned air from the air conditioner 4. The air discharged out from the air outlet 27 can send the comfortable air to an area around the seat 7. The second RAS 20b also provides this function.

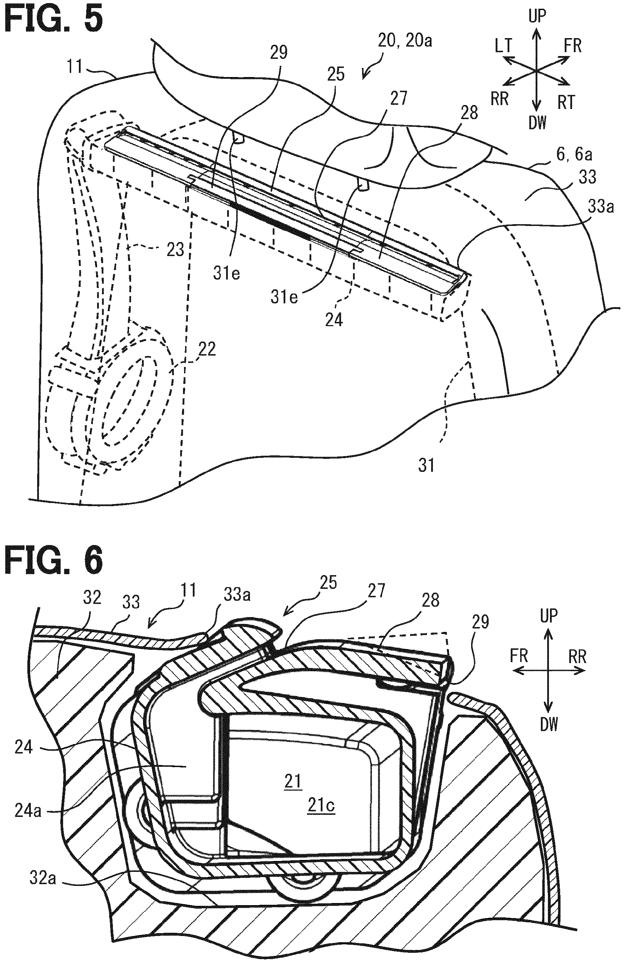

FIG. 5 shows a corner portion of an upper rear of the seat 6a. The exposed portion 25 is exposed from the surface material layer 33. The exposed portion 25 provides an appearance integrated with the surface of the sheet 6a.

FIG. 6 shows a cross section at a line VI-VI in FIG. 3. The seat pad 32 has an outer recess 32a corresponding to the corner portion of the upper rear of the seat 6a. The outer recess 32a opens toward the outside of the sheet 6a. The lateral duct 24 is accommodated in the outer recess 32a. The exposed portion 25 is exposed to the passenger compartment 2 without being covered by the surface material layer 33.

The lateral duct 24 has a plurality of ribs 24a for adjusting air volume distribution from the discharge outlet 27. The discharge outlet 27 extends to face the rear seat, that is, the seat 7. The adjustment mechanism 29 can displace the surface of the tongue portion 28 as indicated by a broken line.

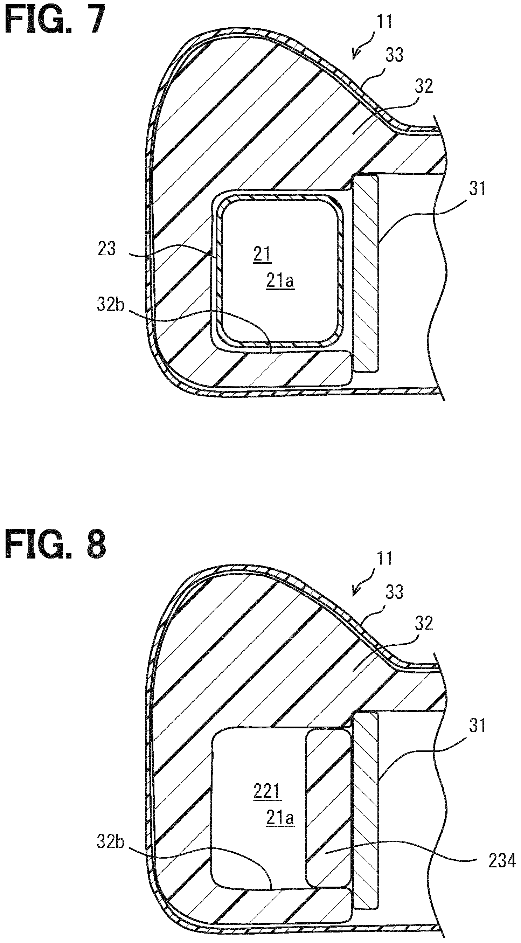

FIG. 7 shows a cross section at a line VII-VII in FIG. 3. The seat pad 32 has an inner recess 32b for accommodating the first RAS 20a along the outside of the frame 31. The inner recess 32b opens toward the frame 31. The height duct 23 is accommodated in the inner recess 32b.

Returning to FIG. 1, the second RAS 20b has the same configuration as the first RAS 20a. The second RAS 20b is arranged along the outside of the frame arranged within an inside of the seat 7. The blower of the second RAS 20b is arranged between the frame and the seat pad of the seat 7. The second RAS 20b sucks air from the inside of the seat 7. The second RAS 20b supplies air toward the seat 8, which is the rear seat. As a result, the second RAS 20b can provide the same advantages as those of the first RAS 20a.

According to the embodiment, an adverse effect, caused by the blower 22 and the air passage 21, applied to the frame 31 of the seats 6a and 7 is suppressed. It is possible to provide the RAS 20, which discharges air toward the rear seat without impairing the fundamental function of the frame 31 for the seats 6a and 7. The RAS 20 can suppress noise and/or suppress vibration. The blower 22 is arranged on a lower part of the seat back 11. As a result, the blower 22 is arranged away from the passengers ear. This arrangement also contributes to substantial noise suppression. The blower 22 has an inlet 22d arranged within an inside of the sheet 6a and 7. As a result, an introducing noise is suppressed.

### Second embodiment

This embodiment is a modification based on the preceding embodiment. In the above embodiment, the RAS 20 includes the height duct 23 and the lateral duct 24. Alternatively, a part of the RAS 20 may be formed by the seat pad 32.

FIG. 8 corresponds to FIG. 7. In this embodiment, the air passage 221 is defined by an inner recess 32b of the seat pad 32 and a lid member 234. The lid member 234 can be provided by the same material as the seat pad 32. The air passage 221 corresponds to the air passage 23a provided by the height duct 23 of the preceding embodiment. The air exiting from the blower 22 passes through the air passage 221 and reaches the lateral duct 24. In this case, a smooth resin layer may be provided on the surfaces of the inner recess 32b and the lid member 234. According to this embodiment, a part of the RAS 20 provided outside of the frame 31 can be provided by the seat pad 32.

### Third Embodiment

This embodiment is a modification based on the preceding embodiment. In the above embodiment, the RAS 20 sucks air from the space between the frame 31 and the seat pad 32. Alternatively, the RAS 20 may suck air from a gap between the frames 31.

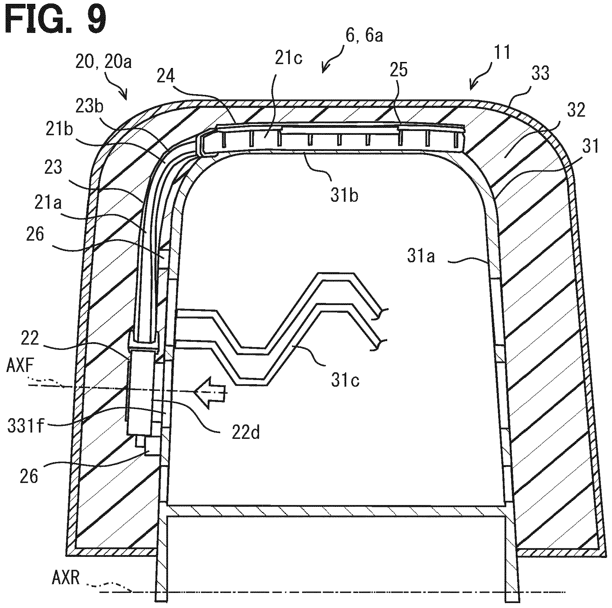

FIG. 9 corresponds to FIG. 3. In this embodiment, the frame 31 has a plurality of gaps 331f. The gap 331f can be provided in various shapes such as a through hole formed in the frame 31, a notch, and a gap between two members. The gap 331f provides an inlet passage, which reaches the inlet 22d through the frame 31 from the frame space. The gap 331f may be an opening formed in order to reduce a weight of the frame 31. Further, the gap 331f may be an opening provided so that the frame 31 fulfills the function as the frame 31 for the seat 6a. The blower 22 is arranged such that the inlet 22d communicates with the gap 331f. According to this embodiment, even if it is the structure that sucks air from the inside of the seat 6a, a sufficient air volume can be obtained from the blower 22.

### Fourth Embodiment

This embodiment is a modification based on the preceding embodiment. In the above embodiment, only the exposed portion 25 of the RAS 20 is exposed to the outside of the surface material layer 33. Alternatively, a part of the duct providing the RAS 20 may be exposed.

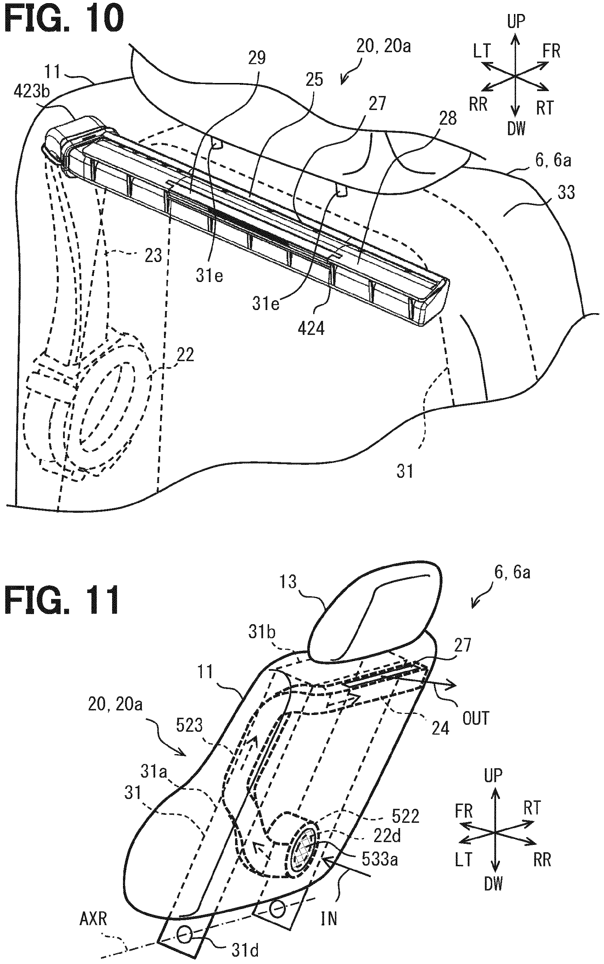

FIG. 10 corresponds to FIG. 5. In this embodiment, the height duct 23 has an elbow 423b. The elbow 423b is exposed to the outside of the surface material layer 33. Further, the lateral duct 424, of its entire portion, is exposed to the outside of the surface material layer 33. In this embodiment, the blower 22 is arranged between the frame 31 and the seat pad 32. The blower 22 is arranged between the frame 31 and the surface material layer 33. In addition, the most part of the height duct 23 is arranged between the frame 31 and the surface material layer 33. Even in this embodiment, noise and/or vibration caused by the RAS 20 is suppressed.

### Fifth Embodiment

This embodiment is a modification based on the preceding embodiment. In the above embodiment, the first RAS 20a has the blower 22 arranged on a side of the frame 31. In other words, the first RAS 20a includes the blower 22 arranged on a side surface in the left direction LT or the right direction RT to the frame 31. Alternatively, the blower 22 may be arranged on the outside to the frame 31 and on the back surface of the frame 31. Further, the blower 22 may suck air from the outside of the seat 6a.

FIG. 11 shows a seat back 11 in this embodiment. The first RAS 20a is arranged on the seat 6a which is the front seat. The first RAS 20a has a blower 522. The blower 522 is arranged on the outside to the frame 31. The blower 522 is arranged on the back surface of the frame 31. In other words, the blower 522 is positioned on the rear direction RR to the frame 31. The blower 522 is positioned between the frame 31 and the surface material layer 33.

The blower 522 has an inlet 22d that faces the rear direction RR from the seat 6a. The inlet 22d faces the rear direction RR. The inlet 22d opens toward the surface material layer 33. The surface material layer 33 has an opening 533a corresponding to the inlet 22d. A mesh-like member is arranged on the opening 533a. The blower 522 has an outlet directed in the lateral direction of the seat 6a, that is, in the left direction LT.

The height duct 523 extends from the blower 522 through the side of the frame 31 to the lateral duct 24. The height duct 523 extends in the up and down direction along the frame 31.

The height duct 523 is connected to the blower 522 at a lower part. In the lower part, the height duct 523 extends in the lateral direction along the back surface of the frame 31 and is bent to go around to the side of the frame 31 from the back surface of the frame 31. The height duct 523 is gradually bent in the upward direction UP from the back surface of the frame 31 to the side of the frame 31.

The height duct 523 is connected to the lateral duct 24 at the top. In the upper part, the height duct 523 is bent toward the rear direction RR. In the upper part, the height duct 523 is bent to go around to the back of the frame 31 from the side of the frame 31.

The first RAS 20a sucks air from the inside of the seat 6a as indicated by an arrow IN. The first RAS 20a sends air along the height duct 523 and the lateral duct 24. The first RAS 20a discharges air from the discharge outlet 27 as indicated by an arrow OUT. Also in this embodiment, the same effects as those of the preceding embodiments can be obtained. Further, the blower 22 may suck air from the outside of the seat 6a. As a result, the air outside the seat 6a is discharged toward the rear seat. When there is an occupant in the rear seat, it is possible to improve a comfortability of the occupant.

### Sixth Embodiment

This embodiment is a modification based on the preceding embodiment. In the above embodiment, the first RAS 20a sucks surrounding air from an inside of the seat 6a. The second RAS 20b sucks surrounding air from an inside of the seat 7. Alternatively, air may be supplied from the air conditioner 4 to the first RAS 20a and the second RAS 20b.

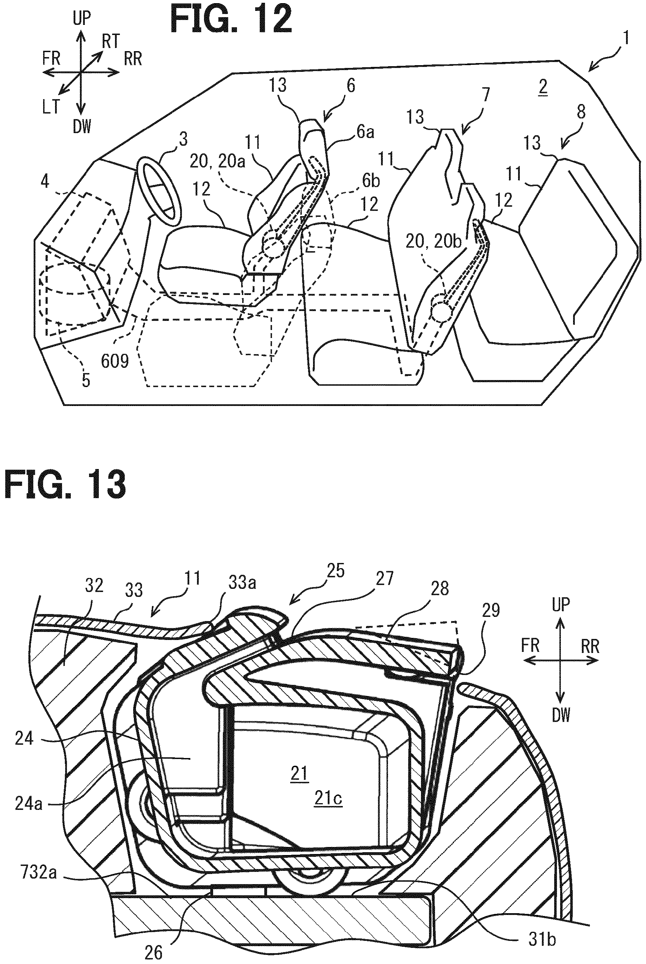

FIG. 12 corresponds to FIG. 1. In this embodiment, a duct 609 is arranged between the air conditioner 4 and the first RAS 20a and between the air conditioner 4 and the second RAS 20b. The duct 609 enables supply of air from the air conditioner 4 to the first RAS 20a. The duct 609 enables supply of air from the air conditioner 4 to the second RAS 20b. According to this embodiment, for example, the air whose temperature is adjusted by the air conditioner 4 can be supplied from the first RAS 20a and the second RAS 20b to the rear seat. According to this embodiment, for example, a fresh air introduced by the air conditioner 4 can be supplied from the first RAS 20a and the second RAS 20b to the rear seat.

### Seventh Embodiment

This embodiment is a modification based on the preceding embodiment. In the above embodiment, the lateral duct 24 is accommodated in the outer recess 32a in the seat pad 32. Alternatively, a partial wall surface of the outer recess 32a may be provided by the upper frame 31b.

FIG. 13 is a cross sectional view corresponding to FIGS. 6. In this embodiment, the outer recess 732a is provided by the seat pad 32 and the upper frame 31b. The upper frame 31 b is exposed mainly on the bottom surface of the outer recess 732a. The lateral duct 24 is supported by the upper frame 31b by the fixing portion 26. Also in this embodiment, the lateral duct 24 is accommodated in the outer recess 732a so that the exposed portion 25 is exposed to the outside.

### Other Embodiments

The disclosure in this specification is not limited to the illustrated embodiment. The disclosure encompasses the illustrated embodiments and variations based on the embodiments by those skilled in the art. For example, the present disclosure is not limited to the combinations of components and/or elements shown in the embodiments. The present disclosure may be implemented in various combinations. The present disclosure may have additional portions which may be added to the embodiments. The present disclosure encompasses omission of the components and/or elements of the embodiments. The present disclosure encompasses the replacement or combination of components and/or elements between one embodiment and another. The disclosed technical scope is not limited to the description of the embodiment. Several technical scopes disclosed are indicated by descriptions in the claims and should be understood to include all modifications within the meaning and scope equivalent to the descriptions in the claims.

In the above embodiment, the RAS 20 discharges wind toward the rear seat. In addition, the RAS 20 may include a heat exchanger which adjusts a temperature of the air. The RAS 20 may include, for example, a heat exchanger which cools the air. In this case, cold air can be discharged out from the RAS 20. When there is an occupant in the rear seat, it is possible to improve a comfortability of the occupant. The RAS 20 may include, for example, a heat exchanger which heats the air.

In the above embodiment, the height ducts 23 and 523 and the lateral ducts 24 and 424 provide the air passages 21 and 221, which extend in an upward direction UP through a side of the sheets 6a and 7 and go around through to a back of the sheets 6a and 7. Alternately, the height ducts 23 and 523 and the lateral ducts 24 and 424 provide the air passages 21 and 221, which extend in an upward direction UP through the sides of the sheets 6a and 7 and go around through to an above of the sheets 6a and 7. The height ducts 23 and 523 and the lateral ducts 24 and 424 may have various cross-sectional shapes such as a square cross section and a round cross section.

In the above embodiment, the frame 31 supports the RAS 20. Alternatively, the seat pad 32 may support the RAS 20. The RAS 20 may be supported by both the frame 31 and the seat pad 32.

## Claims

1. A blower device for rear seat, comprising:
a blower (22, 522) which is arranged between a frame (31) of a seat arranged in front of a rear seat and a surface material layer (33) of the seat;
a member (23, 24, 32, 234, 424) which defines and forms an air passage (21) extending from the blower along an outside of the frame; and
a member (25) which defines and forms a discharge outlet (27) from which air supplied from the air passage is discharged toward the rear seat.

2. The blower device for rear seat claimed in claim 1, wherein
the blower is positioned between the frame and a seat pad (32) of the seat.

3. The blower device for rear seat claimed in claim 1 or 2, wherein
the blower is positioned on a lower portion of the seat.

4. The blower device for rear seat claimed in any one of claims 1-3, wherein the blower has an inlet (22d) which opens at an inside of the seat.

5. The blower device for rear seat claimed in claim 4, wherein
the inlet opens toward the frame.

6. The blower device for rear seat claimed in claim 4, wherein
the inlet opens toward the surface material layer.

7. The blower device for rear seat claimed in any one of claims 1-6, wherein the air passage includes:
an up and down passage (21a) extending from the blower along a side of the frame;
an elbow passage (21b) which bends in the width direction from the up and down passage at a shoulder of the seat; and
a lateral passage (21c) extending along the width direction of the seat from the elbow passage.

8. The blower device for rear seat claimed in claim 7, wherein
the lateral passage is positioned on a rear corner in the upper part of the seat, and wherein
the elbow passage is bent in a rearward direction (RR) from the up and down passage.

9. The blower device for rear seat claimed in claim 7 or 8, wherein
the discharge outlet is elongated along the lateral passage and includes an adjustment mechanism (29) only on a central portion in the width direction.

10. The blower device for rear seat claimed in any one of claims 1-9, wherein the member defining and forming the air passage is positioned between the frame and the surface material layer, and wherein
the member defining and forming the discharge outlet is exposed to the outside of the seat through an opening (33a) provided on the surface material layer.
